# EUROPEAN PATENT APPLICATION

(11) **EP 1 321 291 A1**
(43) Date of publication of application: **25.06.2003**
(21) Application number: 01934530.5
(22) Date of filing: 04.06.2001
(51) Int. Cl.: B32B 27/18, D06M 11/00, D06M 23/12, D06M 15/564

(54) **MOISTURE-PERMEABLE, WATERPROOF AND HEAT INSULATING FABRIC AND MOISTURE-PERMEABLE, WATERPROOF AND HEAT INSULATING RESIN FILM WITH RELEASING PAPER**

(30) Priority: 27.06.2000 JP 2000197878
(71) Applicant: KS Dyeing & Printing Co., Ltd., Nomi-gun, Ishikawa 929-0124 (JP); KOMATSU SEIREN CO., LTD., Nomi-gun Ishikawa 929-0124 (JP)
(72) Inventor: ZENDA, Tatsuya, Nomi-gun, Ishikawa 923-1121 (JP); KOIZUMI, Makoto, KS Dyeing & Printing Co., Ltd., Nomi-gun, Ishikawa 929-0124 (JP); TAJIMA, Syouiti, KS Dyeing & Printing Co., Ltd., Nomi-gun, Ishikawa 929-0124 (JP); OKAJIMA, Kazuyoshi, KS Dyeing & Printing Co., Ltd., Nomi-gun, Ishikawa 929-0124 (JP); SHIMANO, Yasunao, KOMATSU SEIREN CO., LTD., Nomi-gun, Ishikawa 929-0124 (JP); YAMAGUCHI, Munehide, KOMATSU SEIREN CO., LTD., Nomi-gun, Ishikawa 929-0124 (JP)
(74) Representative: Coleiro, Raymond
(86) International application number: JP0104706
(87) International publication number: WO02000433

(57) **Abstract**

A moisture-permeable/waterproof heat-retaining fabric comprising a textile fabric base material and a moisture-permeable/waterproof resin film containing hollow microcapsules and/or an infrared absorber, provided on at least one side thereof, and a release sheet-attached moisture-permeable/waterproof heat-retaining resin film which comprises a release sheet and a moisture-permeable/waterproof resin film containing hollow microcapsules and/or an infrared absorber, provided thereon, for production of the moisture-permeable/waterproof fabric. The fabric is lightweight and heat-retaining, exhibits both waterproofness and moisture permeability, and is comfortable and prevents a stuffy feel even after sweating after vigorous exercise.

## Description

### Technical Field

The present invention relates to a moisture-permeable/waterproof heat-retaining fabric and to a moisture-permeable/waterproof heat-retaining resin film with an attached release sheet. More specifically, the invention relates to a moisture-permeable/waterproof heat-retaining fabric exhibiting both moisture permeability/waterproofness and heat retention, and to a moisture-permeable/waterproof heat-retaining resin film with an attached release sheet which is used for the production of the moisture-permeable/waterproof heat-retaining fabric.

### Background Art

Many methods for providing a heat-retaining fabric performance have been proposed in the past, and methods for conferring heat retention have included, for example, creating dead air to prevent heat loss due to air convection and thereby increase the heat retention. Specifically, this includes a method of creating dead air by raised fibers or the like such as with blankets, and a method of creating dead air using hollow fibers.

Methods are also known for increasing heat retention by imparting fabrics with materials that absorb the infrared rays of sunlight and the like. A specific method involves kneading or coating fibers with an infrared-absorbing material such as carbon black or a colored metal carbide, for example, zirconium carbide.

On the other hand, various methods have also been proposed for providing a moisture-permeable/waterproof fabric performance, and among them are methods in which a woven fabric is imparted with a resin film which is both moisture-permeable and waterproof in order to provide the fabric with a moisture-permeable/waterproof property. Specifically, these include a method of coating one side of a woven fabric with a moisture-permeable urethane resin solution and drying to obtain a moisture-permeable/waterproof fabric, a method of forming a moisture-permeable urethane resin film on a release sheet and then attaching this to a woven fabric with an adhesive, and a method of coating a urethane resin solution onto a woven fabric and then coagulating it in water to form a porous film.

However, no method has yet been proposed for obtaining fabrics with both heat retention and moisture-permeable/waterproof properties. The functions of heat retention and moisture-permeability/waterproofness are clearly essential functions especially for winter sportswear, mountain-climbing clothing and winterized clothing.

The object can, of course, be achieved by using thick fiber materials, for example, materials containing down or cotton wool between fabrics or materials such as raised fabrics or fleece, and forming moisture-permeable/waterproof films on them, but the fabrics obtained by such methods are thick and heavy, and such clothing is therefore poorly suited for sports, mountain climbing, work activities and the like.

### Disclosure of the Invention

It is an object of the present invention to provide a fabric which is lightweight and heat-retaining, exhibits both waterproofness and moisture permeability, and is comfortable and prevents a stuffy feel even during sweating after vigorous exercise.

In order to solve the problems described above, the invention provides a moisture-permeable/waterproof heat-retaining fabric comprising a textile fabric base material and a moisture-permeable/waterproof resin film containing hollow microcapsules and/or an infrared absorber, provided on at least one side thereof.

The invention further provides a release sheet-attached moisture-permeable/waterproof heat-retaining resin film which comprises a release sheet, and a moisture-permeable/waterproof resin film, containing hollow microcapsules and/or an infrared absorber, provided thereon.

### Best Mode for Carrying Out the Invention

As textile fabric base materials usable for the invention there may be mentioned woven, knitted and nonwoven fabrics of natural fibers such as cotton, silk and wool; synthetic fibers such as polyester, polyamide and acryl; semi-synthetic fibers such as diacetate and triacetate; regenerated fibers such as rayon, and combinations thereof.

According to the invention, hollow microcapsules are used to improve the heat retention of the obtained moisture-permeable/waterproof fabric, and the following two types of microcapsules are preferred for use.

The first type are hollow microcapsules with a mean particle size of 10-200 µm. Heat expanding microcapsules may be used in order to obtain microcapsules of such a size. The heat-expanding microcapsules may consist of a low-boiling-point hydrocarbon enclosed in microcapsules made of a copolymer of vinylidene chloride or acrylonitrile. Such microcapsules are commercially available with a particle size of about 1-30 µm, and these are hollow microcapsules that expand when subjected to heat treatment at 100-190°C. The mean particle size of such microcapsules is preferably 10-200 µm after heat expansion.

The amount of the microcapsules used is preferably 1-100 parts by mass per 100 parts by mass of the solid content of the resin forming the resin film described hereunder. At less than 1 part by mass, the expanding effect of the microcapsules may be so low that their contribution to heat retention is insufficient. At greater than 100 parts by mass, the expanding effect of the microcapsules may be so notable that the strength of the resin film and microcapsule film is reduced, thus lowering the practical usefulness. A more preferred range is 10-50 parts by mass per 100 parts by weight of the resin solid content.

The second type of hollow microcapsules have a mean particle size of 1.0 µm or less, and preferably about 0.5 µm or less. The microcapsules are not particularly restricted, but are preferably composed of a styrene resin, acrylic resin and/or a copolymer resin thereof, or another commonly used resin. Specifically there may be mentioned styrene resins such as polystyrene and poly-α-methylstyrene, and acrylic resins such as polymethyl methacrylate, polyethyl methacrylate, polyisopropyl methacrylate and polymethacrylonitrile, as well as polyvinyl chloride, polytetrafluoroethylene, polyvinyl alcohol, poly-o-vinylbenzyl alcohol, poly-m-vinylbenzyl alcohol, poly-p-vinylbenzyl alcohol, polyvinyl formal, polyvinyl acetal, polyvinyl propional, polyvinyl butyral, polyvinyl isobutyral, polyvinyl-tert-butyl ether, polyvinylpyrrolidone, polyvinylcarbazole, cellulose acetate, polycarbonate and copolymers thereof.

The hollow volume of the hollow microcapsules with a mean particle size of 1.0 µm or less is preferably at least 25% by volume, and the structure may comprise formation of numerous fine pores, formation of a single shell layer or formation of multi shell layers. The hollow volume is the ratio of the volume of the hollow portion to the particle volume. The volume of the hollow portion may be measured by observation of the hollow particles under a light microscope after immersion in a hydrocarbon oil (np: 1.51), as described in Japanese Unexamined Patent Publication No. 56-32513.

Hollow microcapsules with a mean particle size of 1.0 µm or less are available in an aqueous dispersion form or in a dried powder form. For production of a moisture-permeable/waterproof heat-retaining fabric using a solvent-based composition, crosslinked microcapsules are preferably used in order to ensure insolubility in the solvent.

The amount of hollow microcapsules with a mean particle size of 1.0 µm or less is preferably 3-150 parts by mass per 100 parts by mass of the solid content of the resin forming the resin film described hereunder. At less than 3 parts by mass, the contribution to heat retention may be insufficient. At greater than 150 parts by mass, the strength of the resin film may be reduced, thus lowering the practical usefulness. A more preferred range is 10-50 parts by mass per 100 parts by mass of the resin solid content.

Various types of materials may be used for the infrared absorber. One type includes compounds with a dark blue-green to black appearance, which are organic colored compounds of anthraquinone-series, phthalocyanine-series or the like. As inorganic compounds there may be mentioned the conductive metal oxides such as antimony-doped tin oxide, tin-doped indium oxide, zinc antimonate and the like. Zirconium carbide or carbon black may also be used.

Among such infrared absorbers, metal oxides are particularly preferred because of their high infrared absorbing property and infrared reflectivity, and their particle size is preferably no greater than 100 nm. Such metal oxides are also preferred because they are transparent to allow passage of visible light rays, and thus will not alter the color shade of the resin film or fabric.

When clothing obtained using a moisture-permeable/waterproof heat-retaining fabric according to the invention is to be dry cleaned, an inorganic compound is preferably used as the infrared absorber from the standpoint of preventing elution of the infrared absorber during the dry cleaning.

The amount of infrared absorber is preferably 0.5-100 parts by mass per 100 parts by mass of the solid content of the resin forming the resin film described hereunder.

The moisture-permeable/waterproof heat-retaining fabric or release sheet-attached moisture-permeable/waterproof heat-retaining resin film of the invention has a moisture-permeable/waterproof heat-retaining resin film containing microcapsules and/or an infrared absorber, as mentioned above, and as examples of resins for the resin film there may be mentioned moisture-permeable/waterproof acrylic resins, urethane resins and the like, including those that give resin films imparting a moisture permeability of 2,000 g/m²•24 hrs or greater (by the calcium chloride method or potassium acetate method of JIS L 1092) and waterproofness with a water pressure resistance of 300 mm or greater (by the low water pressure method of JIS L 1099) to the moisture-permeable/waterproof heat-retaining fabric.

Preferred examples of urethane resins that can give resin films with moisture permeability/waterproofness include hydrophilic ether-based polyurethane resins obtained by reacting polyethylene glycol or polyethylene glycol/polypropylene glycol copolymer with an isocyanate.

Preferred urethane resins are thermoplastic urethane resins, and specifically resins composed of the following hydrophilic compounds (1) to (3).
(1) Polymeric diols having the ethylene oxide structural unit -CH₂CH₂O- in the molecule or diol mixtures containing such polymeric diols, wherein the proportion of the ethylene oxide structural units in the total polymeric diols is 20-70%.
(2) Organic diisocyanates
(3) Chain extenders

As examples of compounds (1) there may be mentioned polyethylene glycol and ethylene oxide/propylene oxide block copolymer. Other polymeric diols that may be used include polycarbonate-based glycols, polyhexamethylene glycol, polycaprolactone glycol and polytetramethylene glycol.

As examples of compounds (2) there may be mentioned 4,4-diphenylmethane diisocyanate, 2,6-tolylene diisocyanate, hexamethylene diisocyanate and isophorone diisocyanate.

As examples of compounds (3) there may be mentioned ethylene glycol, propylene glycol, 1,4-butanediol, ethylenediamine, hydrazine and adipic dihydrazide.

The amount of each of the compounds (1), (2) and (3) to be used may be in the range of 1:2.0-5.0:2.0-4.0, in terms of molar ratio.

The starting material for a two-pack type urethane resin for an adhesive may be the same starting materials as compounds (1), (2) and (3), in which case the amounts used are preferably in the range of 1:2.0-5.0:0.6-0.3 in terms of molar ratio. Since such urethane resins have terminal hydroxyl groups, when such a resin is used as an adhesive, a difunctional or trifunctional polyisocyanate may be used therewith for curing. As examples of such polyisocyanates there may be mentioned isocyanurates obtained by trimerizing hexamethylene diisocyanate, adducts obtained by reacting hexamethylene diisocyanate with trimethylolpropane, and difunctional isocyanates obtained by reacting hexamethylene diisocyanate with butanediol and the like. There may also be mentioned isocyanurates obtained by imparting a hydrophilic group to hexamethylene diisocyanate and then trimerizing.

The amount thereof used may be in the range of 1.0-2.0 in terms of the number of moles of the polyisocyanate based on the number of moles of hydroxyl groups of the polyurethane resin. In addition, a tertiary amine or a tin compound such as dibutyltin dilaurate may be used as a promoting catalyst for condensation reaction.

Such ether-based polyurethane resins are available in the form of organic solvent solutions with a solid content of about 30%, but according to the invention, it is preferred to select one with as low a content as possible of organic solvent such as dimethylformamide or methyl ethyl ketone. When such organic solvents are present in large amounts, the microcapsule films may dissolve and disintegrate, resulting in loss of the heat expanding property. An aqueous urethane resin may also be used.

A method of producing a moisture-permeable/waterproof heat-retaining fabric of the invention will now be explained.

For example, a moisture-permeable/waterproof heat-retaining fabric of the invention may be produced, if necessary, by a direct coating method in which a textile fabric base material subjected to water repellent treatment is directly coated with a resin solution containing microcapsules and/or an infrared absorber. The specific method of coating may be a method employing a knife coater, gravure coater, die coater or the like.

A dry laminating method may also be used, wherein the resin solution is coated and dried onto a release sheet to form a resin film, after which a two-pack type adhesive or hot-melt adhesive, such as a urethane resin, is coated and dried onto the resin film and then a hot roll is used for attachment with a textile fabric base material.

The amount of the resin solution to be coated is preferably 20-500 g/m² in the wet state containing the solvent, etc. Additives such as crosslinking agents, antioxidants or the like may also be added to the resin solution, in addition to the microcapsules and/or infrared absorber.

The moisture-permeable/waterproof heat-retaining fabric of the invention includes a resin film containing microcapsules and/or an infrared absorber provided on at least one side of a textile fabric base material, and it may be obtained by coating a urethane resin, acrylic resin, polyester resin, fluorine-containing resin such as tetrafluoroethylene, or the like onto at least one side of the textile fabric base material and then applying the resin film containing the microcapsules and/or infrared absorber, or else by applying the resin film containing the microcapsules and/or infrared absorber onto at least one side of the fiber fabric base material and then coating it with a urethane resin, acrylic resin, polyester resin, fluorine-containing resin such as tetrafluoroethylene or the like.

The present invention will now be further illustrated by way of examples and comparative examples. The "parts" and "%" values throughout the examples refer to parts by mass and % by mass, respectively. The performance of the moisture-permeable/waterproof heat-retaining fabrics obtained in the examples was measured by the following methods.

### A. Temperature increase difference

The test sample was irradiated with a Toshiba Photoreflector Lamp by Toshiba Battery Co., Ltd. at the daylight color setting of 100 V, 500 W, and at a distance of 15 cm. A non-contact thermometer (product of Yokokawa Laboratories) was then used to measure the temperature of the test sample on the back side from the lamp irradiation side. The temperatures were measured for the examples and comparative examples, and the temperature increase differences were determined.

### B. Heat retention

Method A of JIS L 1096

### C. Moisture permeability

Calcium chloride method/potassium acetate method of JIS L 1092

The units were recorded as values adjusted with respect to 24 hours.

### D. Water pressure resistance

The low water pressure method or high water pressure method of JIS L 1092 was used. (Measurement was carried out by the low water pressure method and, when the measured value exceeded 2,000 mm, the high water pressure method was used.) In cases where the test sample stretched upon application of water pressure, a nylon taffeta (with a density of about 210 filaments/2.54 cm as the total for warp and weft) or the like was placed over the test sample before mounting on the tester and measuring. The units for the samples measured by the high water pressure method were recorded after conversion to 9.8 kPa = 1,000 mm water column, in order to facilitate comparison with the values measured by the low water pressure method.

### Example 1

A nylon taffeta (with a warp density of 117 filaments/2.54 cm and a weft density of 88 filaments/2.54 cm, and 70 denier/68 filaments for both warp and weft) was dyed to a navy blue color with an acidic dye, and a 5% aqueous solution of ASAHIGUARD AG710 (water repellent agent by Asahi Denka Kogyo Co., Ltd.) was used for water repellent treatment, to obtain a textile fabric base material.

A urethane resin solution with the following composition was used as the resin solution.

| Resin solution composition | |
|---|---|
| Moisture-permeable urethane resin (solid content: 30%, organic solvent: 70%) | 100 parts |
| (Organic solvent: 14% dimethylformamide, 56% toluene) | |
| Toluene | 30 parts |
| Zinc antimonate (Isopropyl alcohol dispersion with 20% solid content) | 5 parts |
| Heat-expanding microcapsule powder (mean particle size: 20-30 µm) | 6 parts |

The moisture-permeable urethane resin used here was composed mainly of an ether-based polyurethane resin, and the microcapsules consisted of pentane enclosed in microcapsules made of an acrylonitrile resin.

After using a knife coating apparatus to coat this resin solution onto one side of the aforementioned textile fabric base material to a coverage of 50 g/m², the coating was dried.

A tenter was then used for heating at 170°C for one minute for heat expansion of the microcapsules. A 5% mineral terpene solution of the solvent-based water repellent agent ASAHIGUARD AG5690 (Asahi Glass Co., Ltd.) was also used for water repellent treatment. Electron microscope observation of the resin film side of the obtained moisture-permeable/waterproof heat-retaining fabric revealed microcapsules with a particle size of from about 100 µm to 120 µm.

The performance of the obtained moisture-permeable/waterproof heat-retaining fabric is shown in Table 1.

### Comparative Example 1

A processed fabric was obtained in the same manner as Example 1, except that the zinc antimonate and heat-expanding microcapsule powder were omitted from the resin solution composition.

The performance of the obtained fabric is shown in Table 1.

**Table 1**

| | Temperature increase difference (°C) | Heat retention (%) | Moisture permeability | | Water pressure resistance (mm) |
|---|---|---|---|---|---|
| | | | Calcium chloride | Potassium acetate | |
| Example 1 | +5 | 18.3 | 3120 | 19100 | 480 |
| Comp.Ex.1 | standard | 9.5 | 3050 | 19300 | 500 |

### Example 2

A polyester taffeta (with a warp density of 112 filaments/2.54 cm and a weft density of 95 filaments/2.54 cm, and 75 denier/72 filaments for both warp and weft) was dyed to a yellow shade with a disperse dye, for use as a textile fabric base material.

A surface resin solution was prepared with the following composition.

| Surface resin solution composition | |
|---|---|
| Moisture-permeable urethane resin (solid content: 30%, organic solvent: 70%) | 100 parts |
| (Organic solvent: 14% dimethylformamide, 56% toluene) | |
| Toluene | 30 parts |
| Zinc antimonate (Isopropyl alcohol dispersion with | |
| 20% solid content) | 5 parts |
| Heat-expanding microcapsule powder (mean particle | |
| size: 20-30 µm) | 6 parts |

The moisture-permeable urethane-based resin used here was composed mainly of an ether-based polyurethane resin, and the microcapsules consisted of pentane enclosed in microcapsules made of an acrylonitrile resin.

After coating this resin solution onto a matte-surface release sheet to a coverage of 30 g/m², the coating was dried to obtain a urethane resin film.

An adhesive resin solution was prepared with the following composition.

| Adhesive resin solution composition | |
|---|---|
| Moisture-permeable urethane resin (30% solid content) | 100 parts |
| Toluene | 25 parts |
| Dimethylformamide | 25 parts |
| Crosslinking agent (CORONATE HL, product of Nihon | |
| Polyurethane Industries Co., Ltd.) | 7 parts |

The moisture-permeable urethane resin used here was composed mainly of an ether-based polyurethane resin.

After coating this composition onto the aforementioned urethane resin film to a thickness of 0.07 mm and drying at 125°C, a 100°C hot roll was used for thermo-compression bonding onto the aforementioned textile fabric base material. The resulting laminate fabric was subjected to water repellent treatment using a 5% mineral terpene solution of ASAHIGUARD AG5690 and then heated at 170°C for one minute to expand the microcapsules.

Observation of the resin film side of the obtained moisture-permeable/waterproof heat-retaining fabric revealed microcapsules with a particle size of from about 80 µm to 120 µm.

The performance of the obtained moisture-permeable/waterproof heat-retaining fabric is shown in Table 2.

### Comparative Example 2

A processed fabric was obtained in the same manner as Example 2, except that the zinc antimonate and heat-expanding microcapsule powder were omitted from the surface resin solution composition.

The performance of the obtained fabric is shown in Table 2.

**Table 2**

| | Temperature increase difference (°C) | Heat retention (%) | Moisture permeability | | Water pressure resistance (mm) |
|---|---|---|---|---|---|
| | | | Calcium chloride | Potassium acetate | |
| Example 2 | +5 | 20.9 | 3580 | 22700 | 10500 |
| Comp.Ex.2 | standard | 12.1 | 3080 | 219000 | 20000+ |

### Example 3

A polyester twill (with a warp density of 171 filaments/2.54 cm and a weft density of 84 filaments/2.54 cm, and 100 denier/50 filaments for both warp and weft) was dyed to a blue shade with a disperse dye and subjected to water repellent treatment using a 5% aqueous solution of ASAHIGUARD AG710, for use as a textile fabric base material.

A resin solution was prepared with the following composition.

| Moisture-permeable coating urethane resin solution composition | |
|---|---|
| Urethane resin (8006, product of DaiNippon Ink Co., Ltd.) | 100 parts |
| Dimethylformamide | 50 parts |
| Silicon dioxide (SYLYSIA 740 by Fuji Silysia Co., | |
| Ltd.) | 5 parts |
| Crosslinking agent (RESAMINE-NE by Dainichi Seika | |
| Co., Ltd.) | 2 parts |

A knife coating apparatus was used to coat this resin solution onto one side of the aforementioned textile fabric base material to a coverage of 50 g/m², and then the coating was coagulated in water for 5 minutes. The solvent was then removed with water at 25°C, and washing and drying were carried out to obtain a moisture-permeable urethane coated fabric.

A resin solution was prepared with the following composition.

| Heat-retaining moisture-permeable coating urethane resin solution composition | |
|---|---|
| Moisture-permeable urethane resin (solid content: 30%, organic solvent: 70%) | 100 parts |
| (Organic solvent: 14% dimethylformamide, 56% toluene) | |
| Toluene | 30 parts |
| Zinc antimonate (Isopropyl alcohol dispersion with | |
| 20% solid content) | 5 parts |
| Heat-expanding microcapsule powder (mean particle | |
| size: 20-30 µm) | 6 parts |

The moisture-permeable urethane resin used here was composed mainly of an ether-based polyurethane resin, and the microcapsules consisted of pentane enclosed in microcapsules made of an acrylonitrile resin.

After using a knife coating apparatus to coat this resin solution onto the aforementioned moisture-permeable urethane-coated fabric to a coverage of 50 g/m², the coating was dried.

A tenter was then used for heating at 170°C for one minute for heat expansion of the microcapsules. A 5% mineral terpene solution of the solvent-based water repellent agent ASAHIGUARD AG5690 was also used for water repellent treatment. Observation of the resin film side of the obtained moisture-permeable/waterproof heat-retaining fabric revealed microcapsules with a particle size of from about 100 µm to 120 µm.

The performance of the obtained moisture-permeable/waterproof heat-retaining fabric is shown in Table 3.

### Comparative Example 3

A processed fabric was obtained in the same manner as Example 3, except that the zinc antimonate and heat-expanding microcapsule powder were omitted from the heat-retaining moisture-permeable coating urethane-based resin solution composition for coating onto the moisture-permeable urethane-coated fabric.

The performance of the obtained fabric is shown in Table 3.

**Table 3**

| | Temperature increase difference (°C) | Heat retention (%) | Moisture permeability | | Water pressure resistance (mm) |
|---|---|---|---|---|---|
| | | | Calcium chloride | Potassium acetate | |
| Example 3 | +5 | 27.9 | 4200 | 9300 | 1200 |
| Comp.Ex.3 | standard | 15.1 | 4300 | 9500 | 1300 |

### Example 4

A polyester taffeta (with a warp density of 112 filaments/2.54 cm and a weft density of 95 filaments/2.54 cm, and 75 denier/72 filaments for both warp and weft) was dyed to a yellow shade with a disperse dye, for use as a textile fabric base material.

A surface resin solution was prepared with the following composition.

| Surface resin solution composition | |
|---|---|
| Moisture-permeable urethane resin (solid content: 30%, organic solvent: 70%) | 100 parts |
| (Organic solvent: 14% dimethylformamide, 56% toluene) | |
| Methyl ethyl ketone | 30 parts |
| Dimethylformamide | 10 parts |
| Zinc antimonate (Isopropyl alcohol dispersion with | |
| 20% solid content) | 5 parts |
| Microcapsules (mean particle size: 0.5 µm) | 15 parts |

The moisture-permeable urethane resin used here was composed mainly of an ether-based polyurethane resin, and the microcapsules consisted of a crosslinked styrene-acryl copolymer, with a hollow volume of 25 vol%.

After coating this resin solution onto a matte-surface release sheet to a coverage of 70 g/m² using a laminating apparatus (knife coater), the coating was dried to obtain a urethane resin film.

An adhesive resin solution was prepared with the following composition.

| Adhesive resin solution composition | |
|---|---|
| Hot-melt urethane resin (30% solid content, 70% organic solvent) | 100 parts |
| (Organic solvent: 35% dimethylformamide, 35% methyl ethyl ketone) | |
| Toluene | 40 parts |

This composition was coated onto the aforementioned urethane resin film in a circular dot fashion with a diameter of about 0.5 mm and dried at 125°C to obtain a release sheet-attached moisture-permeable/waterproof heat-retaining resin film.

A 100°C hot roll was then used for thermo-compression bonding with the aforementioned textile fabric base material. The resulting laminate fabric was subjected to water repellent treatment using a 5% mineral terpene solution of ASAHIGUARD AG5690 and then heated at 170°C.

The performance of the obtained moisture-permeable/waterproof heat-retaining fabric is shown in Table 4.

### Comparative Example 4

A processed fabric was obtained in the same manner as Example 4, except that the zinc antimonate and microcapsules were omitted from the surface resin solution.

The performance of the obtained fabric is shown in Table 4.

**Table 4**

| | Temperature increase difference (°C) | Heat retention (%) | Moisture permeability | | Water pressure resistance (mm) |
|---|---|---|---|---|---|
| | | | Calcium chloride | Potassium acetate | |
| Example 4 | +5 | 18.5 | 4200 | 21500 | 15200 |
| Comp.Ex.4 | standard | 12.5 | 4000 | 20300 | 20000+ |

### Industrial Applicability

By using the moisture-permeable/waterproof heat-retaining fabric of the invention for production of skiwear and the like, it is possible to prevent a stuffy feel inside clothing which occurs when sweat is secreted upon vigorous exercising of the body, since the resulting moisture is released out of the clothing; in addition, since a heat-retention property is exhibited to prevent coldness even in environments which produce a cold feeling, during or after exercise, a more comfortable environment is created. Moreover, because of the excellent heat retention, it is possible to reduce or eliminate the use of down in conventional products employing down or other fillings, thus allowing provision of more lightweight clothing and the like with excellent flexible maneuverability.

According to the present invention, therefore, products can be made more lightweight and less bulky, allowing provision of exercise wear such as skiwear, of working jumpers such as anoraks, or of tents and the like, with excellent maneuverability, portability, heat retention and moisture-permeable/waterproof properties.

## Claims

1. A moisture-permeable/waterproof heat retaining fabric comprising a textile fabric base material and a moisture-permeable/waterproof resin film, containing hollow microcapsules and/or an infrared absorber, provided on at least one side thereof.

2. A moisture-permeable/waterproof heat-retaining fabric according to claim 1, wherein the mean particle size of the microcapsules is 10-200 µm.

3. A moisture-permeable/waterproof heat-retaining fabric according to claim 1 or 2, wherein the microcapsules are heat-expanded.

4. A moisture-permeable/waterproof heat-retaining fabric according to claim 1, wherein the mean particle size of the microcapsules is 1.0 µm or smaller.

5. A release sheet-attached moisture-permeable/waterproof heat-retaining resin film which comprises a release sheet and a moisture-permeable/waterproof resin film containing hollow microcapsules and/or an infrared absorber, provided thereon.

6. A release sheet-attached moisture-permeable/waterproof heat-retaining resin film according to claim 5, wherein the resin film comprises a urethane resin layer and a hot-melt adhesive layer.
